# EUROPEAN PATENT APPLICATION

(11) **EP 4 235 859 A1**
(43) Date of publication of application: **30.08.2023**
(21) Application number: 21893431.3
(22) Date of filing: 19.07.2021
(51) Int. Cl.: H01M 4/36

(54) **SILICON-CARBON COMPOSITE MATERIAL AND PREPARATION METHOD THEREFOR AND APPLICATION THEREOF**

(30) Priority: 20.11.2020 CN 202011306499
(71) Applicant: Huawei Technologies Co., Ltd., Shenzhen, Guangdong 518129 (CN)
(72) Inventor: SHA, Yujing, Shenzhen, Guangdong 518129 (CN); YU, Ruohan, Wuhan, Hubei 430070 (CN); XIA, Shengan, Shenzhen, Guangdong 518129 (CN); LI, Yangxing, Shenzhen, Guangdong 518129 (CN); ZHOU, Liang, Wuhan, Hubei 430070 (CN)
(74) Representative: Gill Jennings & Every LLP
(86) International application number: PCT/CN2021/107112
(87) International publication number: WO 2022/105279

(57) **Abstract**

A silicon carbon composite material and a preparation method and application of the silicon carbon composite material are provided. The silicon carbon composite material includes a core and a carbon coating layer. At least one part of a surface of the core is covered by the carbon coating layer. The core includes a carbon matrix and SiOₓ particles, the carbon matrix is continuously distributed and includes N channels in communication with outside, and the SiOₓ particles are filled in the channels. A size of the SiOₓ particle is 0.1 nm to 0.9 nm, 0.9≤x≤1.7, and N≥1 and is an integer. A structure and composition of the silicon carbon composite material are adjusted, so that defects of poor stability and poor electrical conductivity of a silicon-based material can be overcome. In this way, a secondary battery has excellent energy density, and also has good cycle performance, rate performance, and fast charging performance.

## Description

This application claims priority to Chinese Patent Application No. 202011306499.0, filed with the China National Intellectual Property Administration on November 20, 2020 and entitled "SILICON CARBON COMPOSITE MATERIAL AND PREPARATION METHOD AND APPLICATION THEREOF", which is incorporated herein by reference in its entirety.

### TECHNICAL FIELD

This application relates to the field of secondary battery technologies, and in particular, to a silicon carbon composite material and a preparation method and application of the silicon carbon composite material.

### BACKGROUND

Lithium-ion batteries have been widely used in consumer electronic products and electric vehicle products due to advantages of high energy utilization efficiency, environmental friendliness, and high energy density; and have attracted much attention as a key technology of a large-scale energy storage system. In one aspect, with development of 5G technologies, a consumer electronic product consumes more power of an antenna and a radio frequency of a battery, and has a higher requirement for battery capacity. In a further aspect, with popularization of pure electric vehicles and hybrid electric vehicles and gradual decline of government subsidies, it is important that electric vehicles rely on their own technologies and product advantages to ensure sustainable and healthy development of an entire industry chain. This poses higher requirements on the lithium-ion batteries, and requires higher energy density and longer cycle life for the lithium-ion batteries. The energy density of the lithium-ion battery is mainly determined by specific capacity and potentials of positive electrode and negative electrode materials. As a negative electrode material of a conventional lithium-ion battery, graphite has low theoretical specific capacity (372 mAhg⁻¹), and cannot meet an increasing energy density requirement of a user for the lithium-ion battery. Theoretical specific capacity of silicon is 4200 mAh/g, and silicon is a material with the highest theoretical gram capacity. Therefore, the silicon-based material is one of the most studied negative electrode materials that are considered to be most likely to replace graphite at present.

However, compared with that of a conventional graphite negative electrode, application of the silicon-based negative electrode is still immature in a battery cell. As a semiconductor material, silicon has extremely low intrinsic electron electrical conductivity, which is only 2.52×10 ⁻⁴ S/m. Therefore, performance of lithium ion conductivity of the silicon-based negative electrode material is poor, which affects a fast charging capability of a battery. In addition, structural stability of silicon is poor. During charging, when lithium ions are deintercalated from a positive electrode and intercalated into a silicon material, the silicon material is expanded and pulverized. During discharging, when lithium ions are deintercalated from the silicon material, the silicon material contracts because a large gap is formed. With continuous charge and discharge of the battery, expansion and contraction of the silicon-based negative electrode seriously affect cycle performance and rate performance of the battery.

### SUMMARY

Embodiments of this application provide a silicon carbon composite material and a preparation method and application of the silicon carbon composite material. A structure and composition of the silicon carbon composite material are adjusted, so that defects of poor stability and poor electrical conductivity of a silicon-based material can be overcome. In this way, a secondary battery has excellent energy density, and also has good cycle performance, rate performance, and fast charging performance.

A first aspect of embodiments of this application provides a silicon carbon composite material, where the silicon carbon composite material includes a core and a carbon coating layer, and at least one part of a surface of the core is covered by the carbon coating layer; and
the core includes a carbon matrix and SiOₓ particles, the carbon matrix is continuously distributed and includes N channels in communication with outside, and the SiOₓ particles are filled in the channels, where
a size of the SiOₓ particle is 0.1 nm to 0.9 nm, 0.9≤x≤1.7, and N≥1 and is an integer.

The silicon carbon composite material in this embodiment of this application is of a core-shell structure, and the SiOₓ particles in the core are mainly used to complete lithium ion deintercalation. Because the size of the SiOₓ particle is extremely small and is less than 1 nm, a degree of expansion and contraction of the SiOₓ particles in the lithium ion deintercalation process is also controlled, to avoid a phenomenon of collapse and pulverization of the SiOₓ particles, thereby helping ensure structural stability of the silicon carbon composite material. In addition, because the SiOₓ particles are filled in the channels of the carbon matrix, the carbon matrix around the SiOₓ particles also plays a buffer role for expansion generated by the SiOₓ particles, thereby further improving structural stability of the silicon carbon composite material. In addition, both a continuous structure of the carbon matrix and the small size of the SiOₓ particles can ensure efficient transmission of lithium ions and electrons, so that the silicon carbon composite material has excellent electrical conductivity.

In addition, a structure of the coating layer of the silicon carbon composite material can effectively prevent an electrolyte from entering the core, so that a SEI film can be prevented from being repeatedly generated, thereby effectively reducing lithium ion consumption and reducing decrease of effective sites of the SiOₓ particles, and the structure of the coating layer can also be used as a buffer of the core to further absorb expansion force generated by the SiOₓ particles, to reduce instability factors of the core, thereby ensuring energy density and structural stability of the silicon carbon composite material.

Therefore, the silicon carbon composite material in this embodiment of this application not only implements high energy density by using the SiOₓ particles, but also has good structural stability and electrical conductivity, so that the secondary battery exhibits balanced electrical performance, and not only has high energy density, but also has good cycle performance, rate performance, and fast charging performance.

In a possible implementation, a mass percentage content of the carbon matrix is 10% to 40% based on a mass of the core. By limiting the mass content of the carbon matrix in the core, balance of energy density, cycle performance, rate performance, and fast charging performance of the secondary battery can be optimized to a great extent.

In a possible implementation, a specific surface area of the carbon matrix is 800 m²/g to 1400 m²/g. The carbon matrix has a channel structure, and a larger specific surface area of the carbon matrix indicates a larger quantity, a smaller size, and a higher distribution density of the channels of the carbon matrix. Therefore, more SiOₓ particles are filled in the channels and are evenly distributed on a surface of the carbon matrix in a high density. A large quantity of SiOₓ particles evenly distributed not only helps improve energy density of the secondary battery, but also facilitates lithium ion intercalation, to ensure a fast charging capability of the secondary battery. In addition, a large quantity of small-sized channels help to make a continuous carbon matrix exist between adjacent SiOₓ particles. This not only can further ensure that the carbon matrix buffers the expansion force of each SiOₓ particle, and improve structural stability of the SiOₓ particles, but also can more quickly conduct lithium ions entering the core into the SiOₓ particles in a charging process, and more quickly conduct lithium ions deintercalated from the SiOₓ particles out of the core in a discharging process, thereby further improving good rate performance and cycle performance of the secondary battery.

In a possible implementation, a specific surface area of the silicon carbon composite material is 5 m²/g to 20 m²/g. The specific surface area indicates that the carbon coating layer on the surface of the silicon carbon composite material is dense. Therefore, the electrolyte can be effectively prevented from passing through the carbon coating layer into the core, to avoid repeated formation of the SEI film caused by possible pulverization and collapse of the SiOₓ particles. This effectively suppresses consumption of lithium ions, and can reserve almost all effective sites of the SiOₓ particles for lithium ion intercalation, so that cycle performance and rate performance of the secondary battery are both optimized to a great extent.

In a possible implementation, in a Raman spectrogram of the carbon matrix, 0.8≤ID/IG≤1.5. This ratio indicates that in the silicon carbon composite material in this embodiment of this application, the carbon matrix has a high graphitization degree. This is more conducive to electron conduction. In addition, when the SiOₓ particles expand, the carbon matrix with a high graphitization degree also slips, so as to better release expansion stress of the SiOₓ particles.

In a possible implementation, a nuclear magnetic resonance spectrum of the silicon carbon composite material includes a Si-C peak and a Si-O peak, and a ratio of strength I_{Si-C} of the Si-C peak to strength I_{Si-O} of the Si-O peak is less than 0.05. Different from a conventional silicon oxygen carbon material that has a large quantity of SiC bonds affecting electrical conductivity of the material, the silicon carbon composite material in this application has an extremely small quantity of Si-C bonds, and therefore, the carbon matrix has better electrical conductivity, so that a fast charging capability of the secondary battery can be implemented.

In a possible implementation, a thickness of the carbon coating layer is 5 nm to 20 nm, and a carbon atom interlayer spacing d002 of the carbon coating layer is 0.3354 nm to 0.34 nm. The coating layer has a high graphitization degree. Even if the coating layer is squeezed due to deformation of the core, the coating layer can also release stress through interlayer slippage, to reduce a probability that the coating layer breaks, and enhance protection strength of the coating layer for the core, thereby further ensuring cycle performance and rate performance of the secondary battery.

In a possible implementation, the silicon carbon composite material further includes at least one of elements N, P, B, Cl, Br, and I. Doping of these heterogeneous elements can improve electrical conductivity of the silicon carbon composite material, and further improve rate performance of the secondary battery.

In a possible implementation, a particle size of the silicon carbon composite material is 50 nm to 2 µm. Based on different particle sizes, the silicon carbon composite material in this embodiment of this application is applicable to different application scenarios. For example, a silicon carbon composite material with a small particle size may be used as a matrix of a negative electrode active material for further processing, and a silicon carbon composite material with a large particle size may be directly used as a negative electrode active material and be mixed with a conductive agent, a binder, and the like to prepare an active function layer of a negative electrode plate.

In a possible implementation, the silicon carbon composite material is prepared by using a method including the following process:
(1) under an alkaline condition, stirring an aqueous solution of trimethoxysilane compounds to make a system turbid, and collecting precursor particles; and
(2) performing sintering treatment on the precursor particles to obtain the silicon carbon composite material, where a temperature of the sintering treatment is 900°C to 1200°C, and duration of the sintering treatment is 1 h to 10 h.

A second aspect of embodiments of this application provides a method for preparing a silicon carbon composite material, including the following steps:
(1) under an alkaline condition at 25°C to 85°C, stirring an aqueous solution of trimethoxysilane compounds to make a system turbid, and collecting precursor particles; and
(2) performing sintering treatment on the precursor particles to obtain the silicon carbon composite material, where a temperature of the sintering treatment is 1000°C to 1200°C, and duration of the sintering treatment is 1 h to 10 h, where
   the silicon carbon composite material includes a core and a carbon coating layer, and at least one part of a surface of the core is covered by the carbon coating layer; and
   the core includes a carbon matrix and SiOₓ particles, the carbon matrix includes N channels in communication with outside, and the SiOₓ particles are filled in the channels, where
   a size of the SiOₓ particle is 0.1 nm to 0.9 nm, and 0.9≤x≤1.7.

By using this preparation method, a silicon carbon composite material that not only helps to make the secondary battery have high energy density, but also makes the secondary battery have good cycle performance, rate performance, and fast charging performance can be obtained through preparation.

In a possible implementation, in step (1), in step (1), ammonia water with a volume concentration of 0.6% to 15% is added to the aqueous solution of trimethoxysilane compounds, so that pH of the system is 8 to 13.

In a possible implementation, in the aqueous solution of trimethoxysilane compounds, a volume concentration of the trimethoxysilane compounds is 0.4% to 5%.

The foregoing process parameter is conducive to dissolution of the raw material, and spherical silsesquioxane precursor particles with a suitable size.

In a possible implementation, a temperature rise speed of the sintering treatment is 1°C/min to 10°C/min. The graphitization degree of the carbon matrix can be improved by controlling a temperature rise procedure.

In a possible implementation, after step (1), the method further includes feeding a carbon source into the system for carbon coating.

In a possible implementation, the carbon coating is performed by using a vapor deposition reaction, and a temperature of the vapor deposition reaction is 700°C to 1200°C.

The foregoing carbon coating process parameter not only helps to form the carbon coating layer of the silicon carbon composite material, but also can further ensure a size of the SiOₓ particle in the internal core, thereby avoiding an increase in the size of the SiOₓ particle.

In a possible implementation, the trimethoxysilane compound is selected from one or more of trimethoxysilane, methyltrimethoxysilane, N-trimethoxypropylsilane, N-trimethoxyoctylsilane, 3-aminopropyltrimethoxysilane, 3-1-[3-(trimethoxysilyl)propyl]urea, N-dodecyltrimethoxysilane, (3-chloropropyl)trimethoxysilane, (3-phobyl propyl)trimethoxysilane, 3 -(2-aminoethyl)-aminopropyltrimethoxysilane, trimethoxybenzenesilane, vinyltrimethoxysilane, and 3-iodophenyltrimethoxysilane.

A third aspect of embodiments of this application provides an electrode plate. The electrode plate includes the silicon carbon composite material in the first aspect, or includes the silicon carbon composite material obtained by using the preparation method in the second aspect.

Because the silicon carbon composite material in the first aspect and the silicon carbon composite material obtained in the second aspect have high energy density, and have good structural stability and electrical conductivity, the electrode plate can exhibit excellent performance. For example, the electrode plate may be a negative electrode plate. Specifically, the electrode plate has a stable structure, an active layer is not easily fall off from a current collector, and the electrode plate has good electrical conductivity, and can further implement high capacity of a secondary battery.

A fourth aspect of embodiments of this application provides a secondary battery. The secondary battery includes the electrode plate in the third aspect.

Because the secondary battery in this embodiment of this application uses the foregoing electrode plate, the secondary battery has high capacity, and also has good performance in cycle performance, rate performance, and fast charging performance.

A fifth aspect of embodiments of this application provides an electronic device. A drive source or an energy storage source of the electronic device is the secondary battery in the fourth aspect.

Because the electronic device is driven or stores energy by using the foregoing secondary battery, a battery life and a life span of the electronic device are excellent, and user experience is excellent.

### BRIEF DESCRIPTION OF DRAWINGS

FIG. 1 is a schematic diagram of a structure of an electronic device according to an embodiment of this application;
FIG. 2 is a schematic diagram of a split structure of an electronic device according to an embodiment of this application;
FIG. 3a is a SEM diagram of an overall morphology and microstructure of a silicon carbon composite material according to Embodiment 1 of this application;
FIG. 3b is an HAADF phase diagram of a cross section of a high-resolution broken region of the silicon carbon composite material according to Embodiment 1 of this application;
FIG. 3c is a TEM diagram of the silicon carbon composite material according to Embodiment 1 of this application;
FIG. 3d is a partial enlarged diagram of a coating layer in FIG. 3c;
FIG. 3e is a high-resolution STEM diagram of the silicon carbon composite material according to Embodiment 1 of this application;
FIG. 3f is an EELS surface scan SEM image of the silicon carbon composite material according to Embodiment 1 of this application;
FIG. 3g is an EELS surface scan SEM image of the silicon carbon composite material according to Embodiment 1 of this application;
FIG. 3h is an EELS surface scan SEM image of the silicon carbon composite material according to Embodiment 1 of this application;
FIG. 4 is a spectrum of a 29Si magic angle spinning nuclear magnetic resonance (MAS NMR) technology of a silicon carbon composite material according to Embodiment 1 of this application;
FIG. 5a is a TEM diagram of a carbon matrix obtained after etching of the silicon carbon composite material according to Embodiment 1 of this application;
FIG. 5b is a Raman spectrogram of the carbon matrix obtained after etching of the silicon carbon composite material according to Embodiment 1 of this application;
FIG. 5c shows N₂ adsorption and desorption curves before and after etching of the silicon carbon composite material according to Embodiment 1 of this application;
FIG. 5d is an N₂ adsorption and desorption aperture distribution curve before and after etching of the silicon carbon composite material according to Embodiment 1 of this application;
FIG. 5e is a CO₂ aperture distribution curve of the carbon matrix obtained after etching of the silicon carbon composite material according to Embodiment 1 of this application;
FIG. 5f is an XPS spectrogram of the silicon carbon composite material according to Embodiment 1 of this application;
FIG. 6 is a schematic diagram of an overall morphology and microstructure of a silicon carbon composite material according to Embodiment 2 of this application;
FIG. 7a is a scanning electron microscope diagram of a morphology of a silicon oxygen carbon negative electrode material according to Comparative Example 1 of this application;
FIG. 7b is an internal TEM diagram of the silicon oxygen carbon negative electrode material according to Comparative Example 1 of this application;
FIG. 8a is an HAADF phase diagram of a cross section of a high-resolution broken region of a silicon carbon composite material according to Comparative Example 2 of this application;
FIG. 8b is a TEM diagram of a carbon matrix obtained after etching of the silicon carbon composite material according to Comparative Example 2; and
FIG. 9 is a spectrum of a 29Si magic angle spinning nuclear magnetic resonance (MAS NMR) technology of the silicon carbon composite material according to Comparative Example 2.

### Descriptions of reference numerals:

1-current collector; 2-electrode active material; 3-conductive agent; 4-binder; 10-display; 30-circuit board; 31-heat emitting element; 40-lithium-ion battery; 50-metal middle frame; 52-metal middle plate; 53-metal frame; 60-rear housing; 100-mobile phone.

### DESCRIPTION OF EMBODIMENTS

Terms used in implementations of this application are merely used to explain specific embodiments of this application, but are not intended to limit this application. The following describes implementations of embodiments of this application in detail with reference to the accompanying drawings.

To overcome a defect of poor structural stability of a silicon-based material, persons skilled in the art improve the silicon-based material by using a plurality of methods.

For example, the document "Crystalline-amorphous core-shell silicon nanowires for high capacity and high current battery electrodes. Nano Lett., 2009, 491-495." describes a core-shell design of silicon nanowires for high power and long-life lithium battery electrodes. "Silicon crystal core-amorphous shell nanowires" are directly grown on a stainless steel collector through simple one-step synthesis. Due to a difference in lithiation potential between amorphous silicon and crystalline silicon, an amorphous silicon shell instead of a crystalline silicon core may be selected to have electrochemical activity. Therefore, the crystalline silicon core plays a role of stable mechanical support and an effective conductive path, and the amorphous shell stores Li+ ions. These core-shell nanowires have a high charge storage capacity of approximately 1000 mAh/g and a capacity retention rate of approximately 90% in 100 cycles. Excellent electrochemical performance is also shown at a high rate of charge and discharge (6.8 A/g, approximately 20 times of carbon at a rate of 1 h). The document "A pomegranate-inspired nanoscale design for largevolume change lithium battery anodes, Nature Nanotech, 2014, 9, 187-192." proposes a silicon anode with a layered structure, which is inspired by a structure of a pomegranate. A single silicon nanoparticle is wrapped by an electrically conductive carbon layer, leaving enough space for expansion and contraction after lithiation and lithium extraction. Then, these hybrid nanoparticles are entirely wrapped in a micron-level bag, and are wrapped by a thick carbon layer, which is used as a barrier to an electrolyte. Due to this layered arrangement, a solid electrolyte interphase remains stable and is spatially limited, and therefore has excellent recyclability (with a capacity retention rate of 97% after 1000 cycles). Although these nanomaterials are structurally designed to alleviate the volume expansion of silicon, and provide a good physical barrier for silicon to protect silicon from direct contact with the electrolyte, due to a large quantity of designs in internal space of the material and a complex structure, there are problems not conducive to practical application, for example, a large specific surface and low tap density. In addition, both silicon nanowires with a core-shell structure and nanosilicon particles with an egg yolk-egg shell structure have poor structural stability against external pressure, and are prone to deformation and particle breakage in a rolling process of actual processing of an electrode plate. As a result, the electrolyte is in direct contact with the internal silicon material, and a large quantity of side reactions occur, affecting performance of a battery cell, and it is difficult to reproduce ultra-high performance in the article.

CN102214823A, CN106816594A, and the like have disclosed a structure of a silicon-silicon oxide complex, and specifically, a structure in which silicon with a particle size of 0.5 nm to 50 nm is dispersed in a silicon oxide at an atomic level and/or in a microcrystalline state. To further improve first efficiency of silicon monoxide, lithium is supplemented on the basis of the foregoing, and a structure in which silicon with a particle size of 1 nm to 50 nm is dispersed in silicate and a silicon oxide at an atomic level and/or in a microcrystalline state is formed. Specifically, nanosilicon is evenly dispersed in a silicon oxide and/or silicate. After lithium is intercalated in the material, the silicon oxide forms chemically inert lithium oxide and silicate networks, which may be used as a buffer layer to alleviate stress generated by expansion of nanocrystalline silicon. In this material structure, nanosilicon is dispersed in SiOₓ and/or silicate networks. Although stress generated by expansion after lithium is intercalated in silicon can be better absorbed, electron electrical conductivity of the network is quite low, affecting a fast charging capability of the material.

CN107093711B and the like disclose a macro preparation method for monodispersive SiOₓ-C composite microspheres and a structure and performance of the microspheres, to improve structural stability of the monodispersive SiOₓ-C composite microspheres. However, in addition to an organic silicone source, a phenol source and formaldehyde are polycondensed, and a resulting product is used as an additional carbon source in a material synthesis process. Therefore, a large quantity of carbon components are introduced into the material, affecting lithium intercalation capacity and first efficiency of the material. In addition, there are a large quantity of Si-C bonds in the material, and therefore, phase separation between SiOₓ and carbon networks cannot be fully implemented. The large quantity of Si-C bonds affects internal electrical conductivity of the material, and electrochemical activity of Si connected to a C atom is quite low. This has negative impact on lithium intercalation capacity and a fast charging capability of the material.

Based on the foregoing defects, a first aspect of embodiments of this application provides a silicon carbon composite material. The silicon carbon composite material includes a core and a carbon coating layer, and at least one part of a surface of the core is covered by the carbon coating layer. The core includes a carbon matrix and SiOₓ particles, the carbon matrix is continuously distributed and includes N channels in communication with outside, and the SiOₓ particles are filled in the channels. A size of the SiOₓ particle is 0.1 nm to 0.9 nm, 0.9≤x≤1.7, and N≥1 and is an integer.

The silicon carbon composite material in this embodiment of this application is of a core-shell structure. The core includes the carbon matrix and the SiOₓ particles with a size of 0.1 nm to 0.9 nm (a maximum size of the SiOₓ particles) accommodated in the channels on a surface of the carbon matrix. It should be noted that, all SiOₓ particles in the silicon carbon composite material in this embodiment of this application are located inside the channels of the carbon matrix, a filling degree of the SiOₓ particles in the channels is not limited in this embodiment of this application, and the filling degree may be less than or equal to 100%. The channel in this embodiment of this application is accommodating space that has a specific depth, is similar to a worm shape, and is in communication with outside; and the carbon matrix is a carbon structure that is continuously distributed and has a specific volume.

As a silicon-based material with a high specific capacity, the SiOₓ particles in the core can significantly improve energy density of the silicon carbon composite material, so that a secondary battery including the silicon carbon composite material has higher energy density. To overcome a defect of poor structural stability of the SiOₓ particles, the size of the SiOₓ particle in this embodiment of this application is extremely small, and is only 0.1 nm to 0.9 nm. Therefore, even if a volume of the SiOₓ particle expands due to lithium ion intercalation, an expansion degree of the SiOₓ particle is extremely low, and a phenomenon of collapse and pulverization basically does not occur. In addition, the carbon matrix that provides accommodating space for the SiOₓ particles not only can buffer expansion of the SiOₓ particles to some extent, but also can effectively separate adjacent SiOₓ particles, to avoid a problem of an excessively high expansion degree of the SiOₓ particles caused by an aggregation phenomenon, thereby further maintaining structural stability of the SiOₓ particles. Therefore, the silicon carbon composite material in this embodiment of this application can overcome defects of poor structural stability and easy expansion of the silicon-based material.

In addition, a small-sized SiOₓ particle also shortens a transmission path of a lithium ion inside the SiOₓ particle, and improves a diffusion speed of the lithium ion. In addition, lithium oxide generated when the SiOₓ particle reacts with an intercalated lithium ion also helps improve ion electrical conductivity. However, in the core, the continuously distributed carbon matrix is actually equivalent to a continuous ion conductive network and an electrically conductive network; and can not only provide a path for intercalating lithium ions into SiOₓ particles, but also quickly output generated electrons to an external circuit. Therefore, the silicon carbon composite material in this embodiment of this application has good electrical conductivity.

Because the silicon-based material has a defect of easy expansion and pulverization, when an electrolyte contacts the silicon-based material, a specific surface of the silicon-based material increases continuously as the silicon-based material is expanded and pulverized repeatedly. As a result, more electrolytes are consumed to repeatedly form an SEI film on a surface of the silicon-based material. This not only causes large consumption of lithium ions, but also causes a safety hazard due to an increase in gas production. However, in the silicon carbon composite material in this embodiment of this application, the carbon coating layer, as a housing structure, covers at least one part of the surface of the core, and can be used as a barrier to prevent the electrolyte from intruding into the core, to reduce a contact area between the electrolyte and the core, especially a contact area between the electrolyte and the SiOₓ particles, thereby avoiding a large lithium loss and excessive gas production.

According to the silicon carbon composite material in this embodiment of this application, the core includes the SiOₓ particles with a high specific capacity, and the size of the SiOₓ particles is controlled and the continuous carbon matrix distributed around the SiOₓ particles is disposed, so that the defects of easy expansion and poor electrical conductivity of the SiOₓ particles are overcome, and negative impact of the SiOₓ particles on cycle performance, rate performance, and fast charging performance of the secondary battery is avoided to a great extent. In addition, the carbon coating layer covering the surface of the core also further reduces a contact area between the silicon carbon composite material and the electrolyte, and reduces a lithium loss and a gas yield in a long-term cycle process of the secondary battery, so that cycle performance and safety performance of the secondary battery are ensured. Therefore, the silicon carbon composite material in this application not only makes the secondary battery have high energy density, but also ensures cycle performance, rate performance, and fast charging performance of the secondary battery, so that the secondary battery has more balanced and better electrical performance.

As a component of the core, a mass percentage content of the carbon matrix in the core may be 10% to 40%. It can be understood that, mass percentage contents of the carbon matrix and the SiOₓ particles, as main components of the core, in the core present opposite trends. To be specific, when the mass percentage content of the carbon matrix in the core increases, the mass percentage content of the SiOₓ particles in the core decreases; or when the mass percentage content of the carbon matrix in the core decreases, the mass percentage content of the SiOₓ particles in the core increases. Although a larger mass content of the SiOₓ particles indicates larger improvement of the energy density of the secondary battery, an expansion phenomenon and an aggregation phenomenon of the SiOₓ particles caused thereby are also quite serious. Therefore, when the mass percentage content of the carbon matrix in the core is 10% to 40%, a buffer effect and a separation effect of the carbon matrix on the SiOₓ particles can be effectively implemented on the premise that the energy density of the secondary battery is satisfactory, and positive impact and negative impact simultaneously brought by the SiOₓ particles are balanced, so that cycle performance and rate performance of the secondary battery are ensured. In addition, the mass percentage content of the carbon matrix can also ensure that the silicon carbon composite material has good electrical conductivity, to further improve a fast charging capability of the secondary battery.

In a possible implementation, a specific surface area of the carbon matrix is 800 m²/g to 1400 m²/g. This indicates that a large quantity of channels are distributed on the surface of the carbon matrix. It can be understood that, a larger value of N indicates a larger quantity of SiOₓ particles. Therefore, the SiOₓ particles have high distribution density on the surface of the carbon matrix, so that lithium ions are more easily intercalated on the surface of the SiOₓ particles, to accelerate an intercalation speed of the lithium ions, thereby facilitating fast charging of the secondary battery. In addition, a large quantity of channel structures also mean that the carbon matrix surrounds the SiOₓ particles, to ensure independence of distribution of the SiOₓ particles, and further improve structural stability of the silicon carbon composite material by reducing aggregation phenomenons of the SiOₓ particles, thereby ensuring cycle performance and rate performance of the secondary battery.

Further, a specific surface area of the silicon carbon composite material in this embodiment of this application is 5 m²/g to 20 m²/g. The silicon carbon composite material has a small specific surface area, indicating that a surface structure of the silicon carbon composite material is dense. This not only avoids, by reducing the contact area between the electrolyte and the surface of the silicon carbon composite material, consumption caused by generation of a large area of SEI films by the electrolyte, but also effectively prevents the electrolyte from entering the core, thereby preventing excessive consumption of the electrolyte caused by expansion and pulverization of SiOₓ particles. Therefore, the specific surface area of the silicon carbon composite material helps to improve the cycle performance and rate performance of the secondary battery by reducing the lithium loss.

In addition, the dense surface of the silicon carbon composite material can reduce contact between the core and the electrolyte, and prevent other compounds in the electrolyte from reacting with the SiOₓ particles in preference to the lithium ions. Therefore, in this implementation, the SiOₓ particles have more effective sites for intercalation into the lithium ions, so that the secondary battery exhibits satisfactory cycle performance and rate performance.

To further ensure excellent electrical conductivity of the carbon matrix and a buffer effect of the carbon matrix on the SiOₓ particles, a carbon matrix with a high graphitization degree may be selected. Specifically, in a Raman spectrogram of the carbon matrix, 0.8≤ID/IG≤1.5. The inventor finds through research that, when a carbon matrix with an ID/IG in this range is subject to stress generated by expansion of the SiOₓ particles, a slip degree of an interlayer spacing can not only effectively release the stress, but also cause no damage to the carbon coating layer.

In addition, when different positive electrode active materials, electrolytes, or separators are used in the secondary battery, fast charging performance of the secondary battery is affected. Therefore, broadly speaking, for the foregoing different positive electrode active materials, electrolytes, separators, and the like, when 0.8≤ID/IG≤1.5 for the carbon matrix, it can be basically ensured that electrical conductivity of the carbon matrix is prominent, to help optimize fast charging performance of the secondary battery to the greatest extent.

In addition to ensuring the graphitization degree of the carbon matrix, in a possible implementation, the silicon carbon composite material in this embodiment of this application is different from a conventional silicon oxygen carbon material in which a large quantity of Si-C bonds exist and therefore electrical conductivity of the material is limited. A nuclear magnetic resonance spectrum of the silicon carbon composite material in this embodiment of this application includes a Si-C peak and a Si-O peak, and a ratio of strength I_{Si-C} of the Si-C peak to strength I_{Si-O} of the Si-O peak is less than 0.05. It can be understood that, although the core of the silicon carbon composite material includes a silicon element and a carbon element, I_{Si-C} /I_{Si-O} of the silicon carbon composite material is extremely low. This indicates that the carbon matrix in the core is basically independent and does not have a strong bonding relationship with the silicon element. Therefore, excellent electrical conductivity of the carbon element is further ensured, so that the secondary battery can exhibit more prominent fast charging performance.

In a possible implementation, the carbon coating layer may be a structure with a thickness of 5 nm to 20 nm and a carbon atom interlayer spacing d002 of 0.3354 nm to 0.34 nm.

As described above, the carbon coating layer in the silicon carbon composite material in this embodiment of this application is mainly used to isolate contact between the electrolyte and the core, so as to avoid affecting cycle performance and rate performance of the secondary battery due to an excessive lithium loss. Specifically, the carbon coating layer with the foregoing parameters can effectively isolate contact between the electrolyte and the core, and when the core expands, the carbon atom interlayer spacing d002 can ensure that the carbon coating layer effectively absorbs expansion force and releases the expansion force through interlayer slippage, to avoid a phenomenon that the carbon coating layer may be broken due to excessive expansion of the SiOₓ particles in a long-term cycle process, and further reduce a probability that the electrolyte may contact the core, thereby helping to maintain the cycle performance and rate performance of the secondary battery.

In addition to elements Si, O, and C, the silicon carbon composite material in this embodiment of this application also includes at least one of heterogeneous elements such as N, P, B, Cl, Br, and I. Specifically, the foregoing heterogeneous element may exist in raw materials for preparing the silicon carbon composite material, so that the heterogeneous element is doped into the silicon carbon composite material. A specific doping site is located in the SiOₓ particle and/or the carbon matrix. Doping of the heterogeneous element helps to improve electrical conductivity of the silicon carbon composite material, so that fast charging performance and rate performance of the secondary battery are improved.

In a specific application process, the silicon carbon composite material in this embodiment of this application may be processed as required as a matrix of an electrode active material by using another process, or may be directly used as an electrode active material and be mixed with a conductive agent, and the like, to prepare an active function layer of an electrode plate. In this embodiment of this application, a particle size of the silicon carbon composite material is 50 nm to 2 µm, and the foregoing application scenario may be implemented by selecting silicon carbon composite materials with different particle sizes. Using preparation of a negative electrode plate as an example, specifically, a silicon carbon composite material with a small particle size is more easily used as a matrix of a negative electrode active material for further processing, and a silicon carbon composite material with a large particle size may be directly used as a negative electrode active material.

In a possible implementation, the silicon carbon composite material in this embodiment of this application is prepared by using a method including the following process:
(1) under an alkaline condition, stir an aqueous solution of trimethoxysilane compounds to make a system turbid, and collect precursor particles; and
(2) perform sintering treatment on the precursor particles to obtain the silicon carbon composite material, where a temperature of the sintering treatment is 900°C to 1200°C, and duration of the sintering treatment is 1 h to 10 h.

In this implementation, the silicon carbon composite material having the foregoing structure is obtained by using the trimethoxysilane compounds as a raw material and by treatment such as dissolution and sintering.

The aqueous solution of the trimethoxysilane compounds in step (1) may be prepared after the trimethoxysilane compounds are added to water and stirred for 10 min to 30 min. In a possible implementation, a volume concentration of the aqueous solution of the trimethoxysilane compounds is 0.4% to 5%.

A specific type of the trimethoxysilane compound is not limited in this embodiment of this application. For example, the trimethoxysilane compound may be selected from at least one of trimethoxysilane, methyltrimethoxysilane, N-trimethoxypropylsilane, N-trimethoxyoctylsilane, 3-aminopropyltrimethoxysilane, 3-1-[3-(trimethoxysilyl)propyl]urea, N-dodecyltrimethoxysilane, (3-chloropropyl)trimethoxysilane, (3-phobyl propyl)trimethoxy silane, 3 -(2-aminoethyl)-aminopropyltrimethoxysilane, trimethoxybenzenesilane, vinyltrimethoxysilane, and 3-iodophenyltrimethoxysilane, and the like. When the trimethoxysilane compound is selected from a plurality of compounds, a ratio between the compounds is not limited in this embodiment of this application.

It can be understood that, by selecting the trimethoxysilane compound, doping of heterogeneous elements in the silicon carbon composite material and control of a mass content of the carbon matrix in the silicon carbon composite material can be implemented.

A temperature range of the foregoing implementation step (1) is broad, and only needs to be basically controlled to be above 0°C and below 100°C (including 0°C and 100°C), and may further be 25°C to 85°C. In a preparation process, a size of the precursor particle may be controlled by controlling the temperature in step (1). Specifically, temperature selection has large impact on the size of the precursor particle, and the size of the precursor particle gradually decreases as the temperature increases.

With stirring of the trimethoxysilane aqueous solution under the alkaline condition, trimethoxysilane hydrolyzes and forms a white emulsion. Stirring is continuously performed and when a color of the white emulsion does not change, stirring is stopped. Filtration is performed after static aging is performed for a period of time, and then the precursor particles are collected. The precursor is specifically a spherical silsesquioxane precursor. Generally, duration for continuous stirring and static aging is 0.5 h to 24 h.

Alkalinity in step (1) means that a pH environment of the system is in a range of 8 to 13. In a possible implementation, the alkaline environment of the system may be implemented by adding ammonia water to the trimethoxysilane aqueous solution. The inventor finds through research that, the concentration of ammonia water has a large impact on the size of the precursor particle, and when the volume concentration of the ammonia water is 0.6% to 15%, the size of the precursor particle can be controlled to be 400 nm to 600 nm. In this range, with an increase of the concentration of ammonia water, the size of the precursor particles decreases first and then tends to be stable.

In step (2), after the collected precursor particles are sintered at 1000°C to 1200°C for 1 h to 10 h, the silicon carbon composite material is obtained. Before sintering, the precursor particles may be washed by using ethanol and be dried.

In a sintering process at 1000°C to 1200°C, C=C groups in the precursor particle are dehydrogenated and carbonized, and are connected to form a continuous carbon matrix, so that SiOₓ is segmented into SiOₓ particles with a size of 0.1 nm to 0.9 nm, and the SiOₓ particles are filled in the carbon matrix. In addition, a carbon matrix is also formed after Si-C bonds in the precursor particle break. In addition, a high-temperature sintering and carbonization process also causes light carbon in the precursor particle to flow to a surface of the particle and to be carbonized to form a carbon coating layer, so that the silicon carbon composite material is obtained. The inventor finds that, in the sintering process of 1 h to 10 h, the graphitization degree of the carbon matrix is affected to different degrees as a sintering time is prolonged.

A second aspect of embodiments of this application provides a method for preparing a silicon carbon composite material, including the following steps:
(1) under an alkaline condition, stir an aqueous solution of trimethoxysilane compounds to make a system turbid, and collect precursor particles; and
(2) perform sintering treatment on the precursor to obtain the silicon carbon composite material, where a temperature of the sintering treatment is 900°C to 1200°C, and duration of the sintering treatment is 1 h to 10 h;
   the silicon carbon composite material includes a core and a carbon coating layer, and at least one part of a surface of the core is covered by the carbon coating layer; and
   the core includes a carbon matrix and SiOₓ particles, the carbon matrix includes N channels in communication with outside, and the SiOₓ particles are filled in the channels, where
   a size of the SiOₓ particle is 0.1 nm to 0.9 nm, and 0.9≤x≤1.7.

In this embodiment of this application, the silicon carbon composite material having the foregoing structure is obtained by using the trimethoxysilane compounds as a raw material and by treatment such as dissolution and sintering. The silicon carbon composite material overcomes defects of poor structural stability and poor electrical conductivity of the silicon-based material, and can balance cycle performance, rate performance, and fast charging performance of the secondary battery when improving energy density of the secondary battery.

The aqueous solution of the trimethoxysilane compounds in step (1) may be prepared after the trimethoxysilane compounds are added to water and stirred for 10 min to 30 min. In a possible implementation, a volume concentration of the aqueous solution of the trimethoxysilane compounds is 0.4% to 5%.

A specific type of the trimethoxysilane compound is not limited in this embodiment of this application. For example, the trimethoxysilane compound may be selected from at least one of trimethoxysilane, methyltrimethoxysilane, N-trimethoxypropylsilane, N-trimethoxyoctylsilane, 3-aminopropyltrimethoxysilane, 3-1-[3-(trimethoxysilyl)propyl]urea, N-dodecyltrimethoxysilane, (3-chloropropyl)trimethoxysilane, (3-phobyl propyl)trimethoxy silane, 3 -(2-aminoethyl)-aminopropyltrimethoxysilane, trimethoxybenzenesilane, vinyltrimethoxysilane, and 3-iodophenyltrimethoxysilane, and the like. When the trimethoxysilane compound is selected from a plurality of compounds, a ratio between the compounds is not limited in this embodiment of this application.

It can be understood that, by selecting the trimethoxysilane compound, doping of heterogeneous elements in the silicon carbon composite material and control of a mass content of the carbon matrix in the silicon carbon composite material can be implemented.

In a conventional technology, to adjust a hydrolysis reaction of a silane compound, an alcohol additive is usually added to the system. To control costs, simplify a process, and improve environmental adaptability of material synthesis, in this embodiment of this application, an alcohol-free hydrolysis method is used, and the trimethoxysilane aqueous solution is stirred under the alkaline condition, so that not only dissolution of trimethoxysilane is facilitated, but also the size of the precursor can be controlled by temperature adjustment.

In this embodiment of this application, a temperature range of the foregoing implementation step (1) is broad, and only needs to be basically controlled to be above 0°C and below 100°C (including 0°C and 100°C), and may further be 25°C to 85°C. In a preparation process, a size of the precursor particle may be controlled by controlling the temperature in step (1). Specifically, temperature selection has large impact on the size of the precursor particle, and the size of the precursor particle gradually decreases as the temperature increases.

With stirring of the trimethoxysilane aqueous solution under the alkaline condition, trimethoxysilane hydrolyzes and forms a white emulsion. Stirring is continuously performed and when a color of the white emulsion does not change, stirring is stopped. Filtration is performed after static aging is performed for a period of time, and then the precursor particles are collected. The precursor is specifically a spherical silsesquioxane precursor. Generally, duration for continuous stirring and static aging is 0.5 h to 24 h.

Alkalinity in step (1) means that a pH environment of the system is in a range of 8 to 13. In a possible implementation, the alkaline environment of the system may be implemented by adding ammonia water to the trimethoxysilane aqueous solution. The inventor finds through research that, the concentration of ammonia water has a large impact on the size of the precursor particle, and when the volume concentration of the ammonia water is 0.6% to 15%, the size of the precursor particle can be controlled to be 400 nm to 600 nm. In this range, with an increase of the concentration of ammonia water, the size of the precursor particles decreases first and then tends to be stable.

In step (2), after the collected precursor particles are sintered at 1000°C to 1200°C for 1 h to 10 h, the silicon carbon composite material is obtained. Before sintering, the precursor particles may be washed by using ethanol and be dried.

In a sintering process, C=C groups in the precursor particle are dehydrogenated and carbonized, and are connected to form a continuous carbon matrix, so that SiOₓ is segmented into SiOₓ particles with a size of 0.1 nm to 0.9 nm, and the SiOₓ particles are filled in the carbon matrix. In addition, a carbon matrix is also formed after Si-C bonds in the precursor particle break. In addition, a high-temperature sintering and carbonization process also causes light carbon in the precursor particle to flow to a surface of the particle and to be carbonized to form a carbon coating layer, so that the silicon carbon composite material is obtained. The inventor finds that, in the sintering process of 1 h to 10 h, the graphitization degree of the carbon matrix is affected to different degrees as a sintering time is prolonged.

Sintering treatment needs to be performed in an inert atmosphere/reducing atmosphere protection atmosphere. The inert atmosphere/reducing atmosphere includes but is not limited to one or more of N₂, Ar, and H₂. In a possible implementation, sintering treatment may be performed in a high-temperature furnace.

During specific sintering treatment, the precursor particles may be placed in a high-temperature furnace, and the precursor particles are gradually warmed up to a target temperature by setting a temperature rise procedure (temperature rise speed), and then sintering treatment is performed for 1 h to 10 h. In a possible implementation, when a temperature rise speed of the sintering treatment is 1°C/min to 10°C/min, a more compact and continuous carbon matrix is formed, thereby facilitating lithium ion conduction.

Further, after step (1), a carbon content in the carbon coating layer on the surface of the core may further be adjusted by feeding a carbon source into the system. Specifically, an operation of feeding the carbon source may be performed before step (2), or in a process of step (2), or after step (2). The carbon source may be, for example, at least one of alkane, alkene, alkyne, and benzene. In a possible implementation, adjusting the carbon content of the carbon coating layer on the surface of the core in a chemical vapor deposition manner helps improve the graphitization degree of the carbon coating layer. Specifically, a temperature of chemical vapor deposition is 700°C to 1200°C.

A third aspect of embodiments of this application provides an electrode plate. The electrode plate includes the silicon carbon composite material in the first aspect, or includes the silicon carbon composite material obtained through preparation in the second aspect.

The electrode plate in this embodiment of this application may be a positive electrode plate or a negative electrode plate.

Using the negative electrode plate as an example, in a possible implementation, a silicon carbon composite material, a conductive agent, a binder, and the like are added to a solvent for stirring dispersion to obtain a negative electrode slurry, and then the negative electrode slurry is coated on at least one surface of a negative electrode current collector (generally a copper foil) and dried, and the negative electrode slurry is converted into a negative electrode active layer, to obtain the negative electrode plate in this embodiment of this application. For example, the conductive agent may be selected from, but is not limited to, at least one of super-P, conductive carbon black, carbon nanotubes, and acetylene black; the binder may be selected from, but is not limited to, one of polyvinylidene fluoride (PVDF) or polyethylene oxide (PEO); and the solvent may be distilled water.

The silicon carbon composite material in the first aspect or the silicon carbon composite material prepared in the second aspect has high energy density, and has good structural stability and electrical conductivity. Therefore, the negative electrode active layer of the electrode plate is not easily fall off from the surface of the current collector and has good electrical conductivity, so that not only energy density of the secondary battery can be improved, but also cycle performance, rate performance, and fast charging performance of the secondary battery can be ensured.

A fourth aspect of embodiments of this application provides a secondary battery. The secondary battery includes the electrode plate in the third aspect.

Because the secondary battery in this embodiment of this application includes the foregoing electrode plate, energy density, cycle performance, rate performance, and fast charging performance are significantly improved. The secondary battery may be, for example, a lithium-ion battery or a sodium-ion battery.

For example, the electrode plate is a negative electrode plate. In addition to the negative electrode plate, the secondary battery in this embodiment of this application further includes a positive electrode plate, a separator, and an electrolyte.

In a possible implementation, the positive electrode plate includes a positive electrode active layer disposed on at least one surface of a positive electrode current collector (generally an aluminum foil). Specifically, a positive electrode slurry is coated on at least one surface of the positive electrode current collector, and then a solvent in the positive electrode slurry is dried, to obtain the positive electrode plate. The positive electrode slurry includes at least a positive electrode active material, a conductive agent, a binder, and a solvent. For example, the positive electrode active material may be selected from, but is not limited to, at least one of lithium cobalt oxide, lithium manganese oxide, lithium nickel cobalt manganese oxide, lithium nickel cobalt aluminum oxide, and lithium iron phosphate; the conductive agent may be selected from, but is not limited to, at least one of super-P, conductive carbon black, carbon nanotubes, and acetylene black; the binder may be selected from, but is not limited to, one of polyvinylidene fluoride (PVDF) or polyethylene oxide (PEO); and the solvent may be N-methyl-2-pyrrolidone (NMP).

In a possible implementation, the separator may be selected from at least one of glass fiber, nonwoven fabric, polyethylene, polypropylene, and polyvinylenedifluoride.

In a possible implementation, the electrolyte includes at least an organic solvent and lithium salt. The organic solvent may be selected from ethylene carbonate, 2,3-butylene carbonate, propylene carbonate, ethyl methyl carbonate, vinylene carbonate, vinyl ethylene carbonate, fluoroethylene carbonate, ethyl methyl fluorocarbonate, difluoroethylene carbonate, dimethyl fluorocarbonate, dimethyl carbonate, diethyl carbonate, and dipropyl carbonate; and the lithium salt may be selected from at least one of lithium hexafluorophosphate, lithium tetrafluoroborate, lithium perchlorate, lithium bis(trifluoromethanesulphonyl)imide (LiTFSI), and lithium bis(fluorosulfonyl)imide (LiFSI).

A fifth aspect of embodiments of this application provides an electronic device. A drive source or an energy storage unit of the electronic device is the secondary battery in the fourth aspect.

Because the electronic device in this embodiment of this application uses the foregoing secondary battery as a drive source or an energy storage unit, a battery life and a life span of the electronic device are excellent, and user satisfaction is high.

The electronic device may include, but is not limited to, a mobile or fixed terminal having a battery, such as a mobile phone, a tablet computer, a notebook computer, an ultra-mobile personal computer (ultra-mobile personal computer, UMPC), a handheld computer, a walkie-talkie, a netbook, a POS machine, a personal digital assistant (personal digital assistant, PDA), a wearable device, or a virtual reality device.

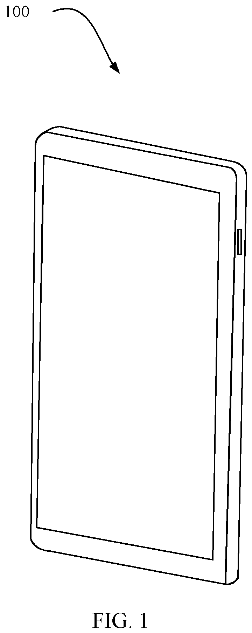

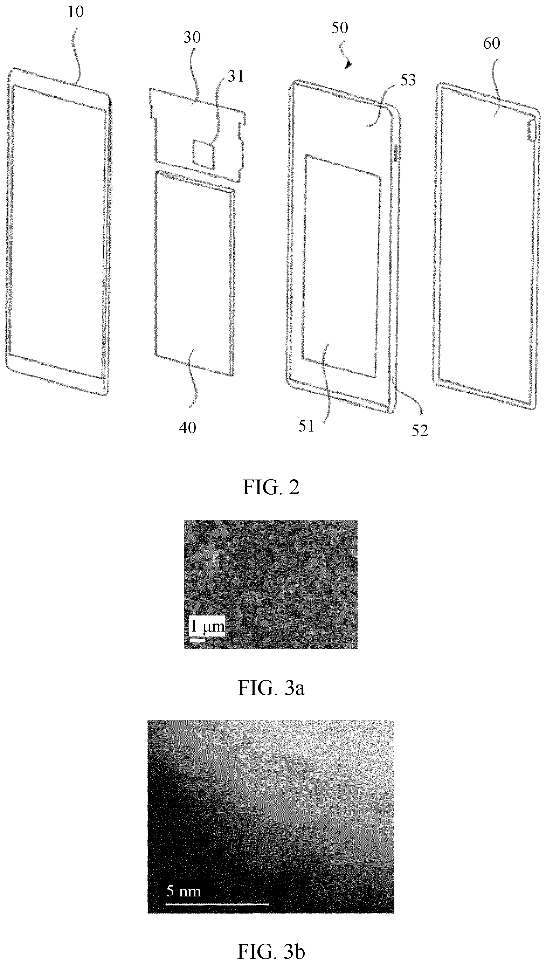

In this embodiment of this application, an example in which a mobile phone 100 is the foregoing electronic device is used for description. The mobile phone 100 may be a foldable mobile phone 100, or may be a bar-type mobile phone 100. In this embodiment of this application, the bar-type mobile phone 100 is used as an example. FIG. 1 and FIG. 2 show a structure of the mobile phone 100. With reference to FIG. 1 and FIG. 2, the mobile phone 100 may include: a display 10, a rear housing 60, and a metal middle frame 50, a circuit board 30, and a secondary battery 40 that are located between the display 10 and the rear housing 60. The display 10 is disposed on one side of the metal middle frame 50, and the rear housing 60 is disposed on the other side of the metal middle frame 50.

The display 10 may be an organic light-emitting diode (Organic Light-Emitting Diode, OLED) display, or may be a liquid crystal display (Liquid Crystal Display, LCD). The rear housing 60 may be a metal rear housing 60, a glass rear housing 60, a plastic rear housing, or a ceramic rear housing 60. A material of the metal middle frame 50 may be a magnesium alloy, or may be an aluminum alloy.

It should be noted that, in this embodiment of this application, a material of the metal middle frame 50 includes but is not limited to a middle frame made of a metal material such as a magnesium alloy, an aluminum alloy, or a titanium alloy, and the metal middle frame 50 may alternatively be a nonmetal middle frame made of a material such as ceramic. Materials of the display 10, the rear housing 60, and the metal middle frame 50 are specifically set based on an actual application. This is not limited in this embodiment.

The metal middle frame 50 may include a metal middle plate 53 and a metal frame 52 that is disposed on a periphery of a bottom frame. The metal frame 52 may include a top frame and a bottom frame that are disposed opposite to each other, and two side frames located between the top frame and the bottom frame. The metal frame 52 and the metal middle plate 53 may be connected through welding, clamping, or integral formation.

The circuit board 30 and the secondary battery 40 may be disposed on the metal middle plate 53 of the metal middle frame 50. For example, the circuit board 30 and the secondary battery 40 are disposed on one side of the metal middle plate 53 facing the rear housing 60, or the circuit board 30 and the secondary battery 40 may be disposed on one side of the metal middle plate 53 facing the display 10. When the circuit board 30 is disposed on the metal middle plate 53, the metal middle frame 50 may be provided with an opening for placing an element on the circuit board 30 at the opening of the metal middle frame 50.

The circuit board 30 may be a printed circuit board (Printed circuit board, PCB), and a heat emitting element 31 is disposed on the circuit board 30. The heat emitting element 31 may be a master chip on the electronic device, for example, a power amplifier, an application processor (Central Processing Unit, CPU), a power management IC (Power Management IC, PMIC), or a radio frequency IC.

The secondary battery 40 may be connected to a charging management module (not shown) and the circuit board 30 by using a power management module. The power management module receives inputs from the secondary battery 40 and/or the charging management module, and supplies power to a processor, an internal memory, an external memory, the display 10, a camera, a communication module, and the like. The power management module may be further configured to monitor parameters such as a capacity of the secondary battery 40, a cycle count of the secondary battery 40, and a health status (electric leakage and impedance) of the secondary battery 40. In some other embodiments, the power management module may alternatively be disposed in a processor of the circuit board 30. In some other embodiments, the power management module and the charging management module may alternatively be disposed in a same component.

It may be understood that, the structure shown in this embodiment of this application does not constitute a specific limitation on the mobile phone 100. In some other embodiments of this application, the mobile phone 100 may include more or fewer components than those shown in the figure, or some components may be combined, or some components may be split, or there may be a different component layout. The components shown in the figure may be implemented by hardware, software, or a combination of software and hardware.

In descriptions of embodiments of this application, it should be noted that, unless otherwise clearly specified and limited, the terms "installation", "connection to", and "connection" should be understood in a broad sense. For example, the connection may be a fixed connection, may be an indirect connection by using an intermediate medium, or may be an internal connection between two elements or an interaction relationship between two elements. For persons of ordinary skill in the art, specific meanings of the foregoing terms in embodiments of this application may be understood based on a specific situation.

The following describes in detail the silicon carbon composite material and the secondary battery in embodiments of this application by using specific embodiments.

### Embodiment 1

The silicon carbon composite material in this embodiment is prepared based on the following method:
(1) Measure out 30 ml of deionized water, place the deionized water in a water bath at an isothermal reaction condition of 85°C, add 0.5 ml of trimethoxysilane to the deionized water, and stir for 10 min to obtain an aqueous solution of trimethoxysilane.
   Under a stirring condition, add 0.2 ml of ammonia water (25wt.% to 28wt.%) to the aqueous solution of trimethoxysilane, to make system pH 8 to 9, and promote hydrolysis, to form a white emulsion, and continue to stir for 3 h, then perform suction filtration to obtain a solid product, wash the solid product by using alcohol, and dry the solid product to obtain spherical trimethoxysilsesquioxane precursors.
(2) Place the spherical trimethoxysilsesquioxane precursors in a tubular furnace, set a temperature rise speed to 10°C/min, and perform heat preservation for 5 h at 1000°C in argon protection atmosphere. When duration for heat preservation reaches 4.5 h, feed a methane/hydrogen gas mixture (10% vol.: 90% vol.) at a gas flow of 100 sccm, and after 0.5 h, stop gas feeding. When the tubular furnace naturally cools down to below 100°C, take out the material, namely, the silicon carbon composite material in this embodiment.

FIG. 3a is a schematic diagram of an overall morphology and microstructure of a silicon carbon composite material according to Embodiment 1 of this application. It can be seen from FIG. 3a that, the silicon carbon composite material in Embodiment 1 is microspheres with evenly distributed sizes and with a diameter of approximately 300 nm.

FIG. 3b is an HAADF phase diagram of a cross section of a high-resolution broken region of the silicon carbon composite material according to Embodiment 1 of this application. It can be seen from FIG. 3b that, in an internal structure of the silicon carbon composite material, worm-shaped SiOₓ (a bright region) formed by bridging each other is distributed in a continuous carbon matrix (a dark region).

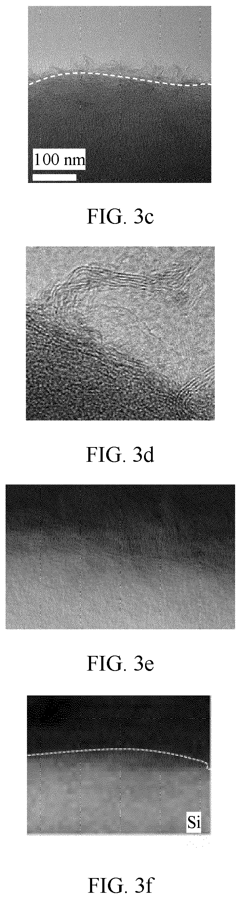

FIG. 3c is a TEM diagram of the silicon carbon composite material according to Embodiment 1 of this application. FIG. 3d is an enlarged diagram of one point of a coating layer in FIG. 3c. As shown in FIG. 3c, there is a carbon coating layer (a part above a dashed line) on a surface of the silicon carbon composite material, and the coating layer is graphitized carbon arranged in order. In addition, in FIG. 3d, d002 is 0.336 nm, and a thickness of the coating layer is 10 nm.

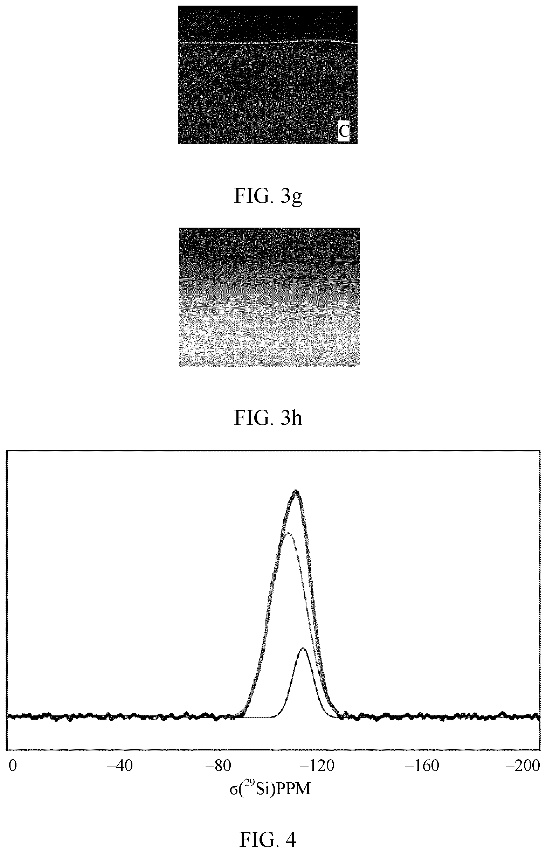

FIG. 3e is a STEM diagram of the silicon carbon composite material according to Embodiment 1 of this application. FIG. 3f to FIG. 3h are EELS surface scan SEM images of the silicon carbon composite material according to Embodiment 1 of this application. Obvious graphitized carbon stripes can be observed from FIG. 3e, and EELS surface scan SEM images of corresponding FIG. 3f to FIG. 3h indicate that a graphitized carbon layer is generated on the surface of the material. In FIG. 3f, a part below a dashed line is displayed in green, and a part above the dashed line is displayed in black, indicating that silicon elements in the material are evenly distributed. FIG. 3g shows a carbon element test for an entire particle. A part below a dashed line is displayed in red, and a part above the dashed line is displayed in black, indicating that there are two existence forms of carbon elements in the material: carbon elements evenly distributed in the particle and a carbon layer coated on a surface of the particle. FIG. 3h may be understood as a composite diagram of FIG. 3f and FIG. 3g, indicating that there is indeed a carbon coating layer on the surface of the particle, and a structure in which silicon and carbon are evenly distributed is inside the particle.

FIG. 4 is a spectrum of a 29Si magic angle spinning nuclear magnetic resonance (MAS NMR) technology of a silicon carbon composite material according to Embodiment 1 of this application. A characteristic peak located at 78.0 cm⁻¹ chemical displacement is a Si-C peak, and it may be found that a ratio of peak strength I(SiC) of Si-C that belongs to 78.0 cm⁻¹ chemical displacement to peak strength I(Si-O) of Si-O(3) that belongs to 111.0 cm⁻¹ chemical displacement meets a relationship of I(Si-C)/I(Si-O)<0.05.

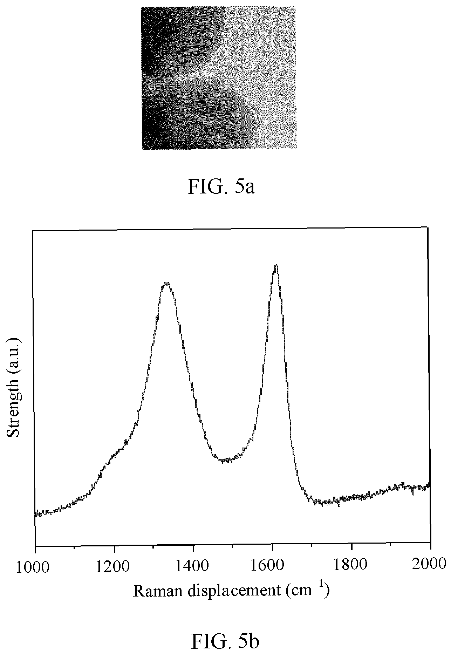

The silicon carbon composite material in Embodiment 1 is etched by using hydrogen fluoride, where SiOₓ is etched off and a 15wt.% carbon matrix is left. FIG. 5a is a TEM diagram of a carbon matrix obtained after etching of the silicon carbon composite material according to Embodiment 1 of this application. As shown in FIG. 5a, the carbon matrix is continuously distributed and has a plurality of channels structures, and is a continuously distributed carbon network structure. FIG. 5b is a Raman spectrogram of the carbon matrix obtained after etching of the silicon carbon composite material according to Embodiment 1 of this application. As shown in FIG. 5b, the carbon matrix has a high graphitization degree, and ID/IG=0.9.

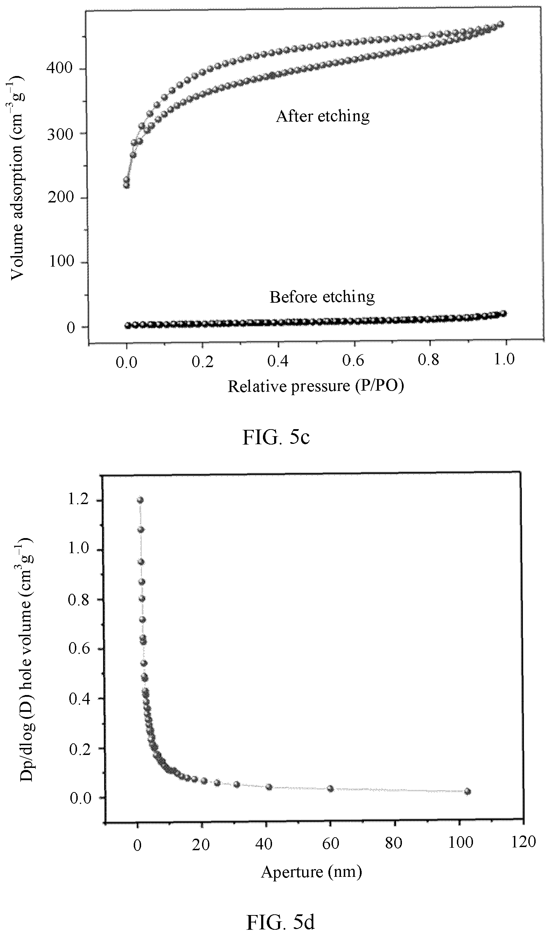

Before and after the silicon carbon composite material in Embodiment 1 is etched, a specific surface area of the silicon carbon composite material before etching and a specific surface area of the carbon matrix after etching are tested by using a nitrogen adsorption and desorption method. FIG. 5c shows N₂ adsorption and desorption curves before and after etching of the silicon carbon composite material according to Embodiment 1 of this application. FIG. 5d is an N₂ adsorption and desorption aperture distribution curve before and after etching of the silicon carbon composite material according to Embodiment 1 of this application. With reference to a BET adsorption isothermal equation, a specific surface area of the silicon carbon composite material before etching is 10 m²/g, and a specific surface area of the carbon matrix after etching is up to 1200 m²/g.

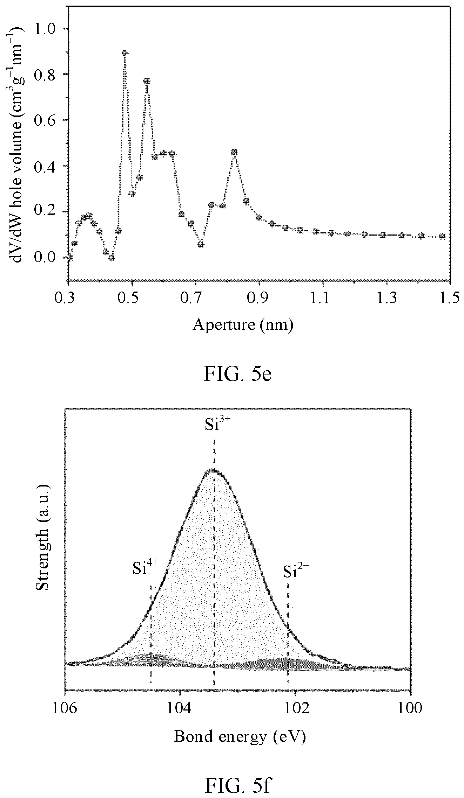

In addition, the carbon matrix after etching is tested by CO₂ adsorption and desorption. FIG. 5e is a CO₂ aperture distribution curve of the carbon matrix obtained after etching of the silicon carbon composite material according to Embodiment 1 of this application. It can be seen that white holes with a size of 0.3 nm to 0.9 nm are rich in the carbon matrix in the gray region of the upper right corner, and the size of the white holes corresponds to the size of the SiOₓ particles.

FIG. 5f is an XPS spectrogram of the silicon carbon composite material according to Embodiment 1 of this application. It can be learned from FIG. 5f that, silicon oxide in the silicon carbon composite material in this embodiment is specifically SiO_{1.48}.

### Embodiment 2

The silicon carbon composite material in this embodiment is prepared based on the following method:
(1) Measure out 50 ml of deionized water, add 1.0 ml of 3-1-[3-(trimethoxysilyl)propyl]urea to the deionized water, and stir for 30 min at a normal temperature, to obtain an aqueous solution of 3-1-[3-(trimethoxysilyl)propyl]urea.
   Under a stirring condition, add 0.5 ml of ammonia water (25wt.% to 28wt.%) to the aqueous solution of 3-1-[3-(trimethoxysilyl)propyl]urea, to make system pH approximately 9, and promote hydrolysis, to form a white suspension, and continue to stir for 24 h, and then perform suction filtration and drying to obtain spherical ureidopropyltrimethoxysilsesquioxane precursors.
(2) Place the ureidopropyltrimethoxysilsesquioxane precursors in a tubular furnace, set a temperature rise speed to 5°C/min, and perform heat preservation for 8 h at 1000°C in argon protection atmosphere. When the tubular furnace naturally cools down to below 100°C, take out the material, namely, the silicon carbon composite material in this embodiment.

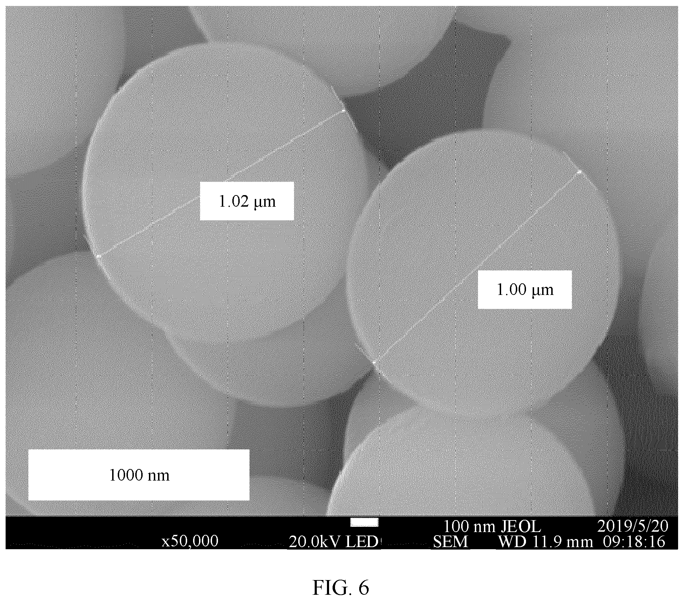

FIG. 6 is a schematic diagram of an overall morphology and microstructure of a silicon carbon composite material according to Embodiment 2 of this application. It can be seen from FIG. 6 that, the silicon carbon composite material in Embodiment 2 is microspheres with evenly distributed sizes and with a diameter of approximately 1 µm.

### Comparative Example 1

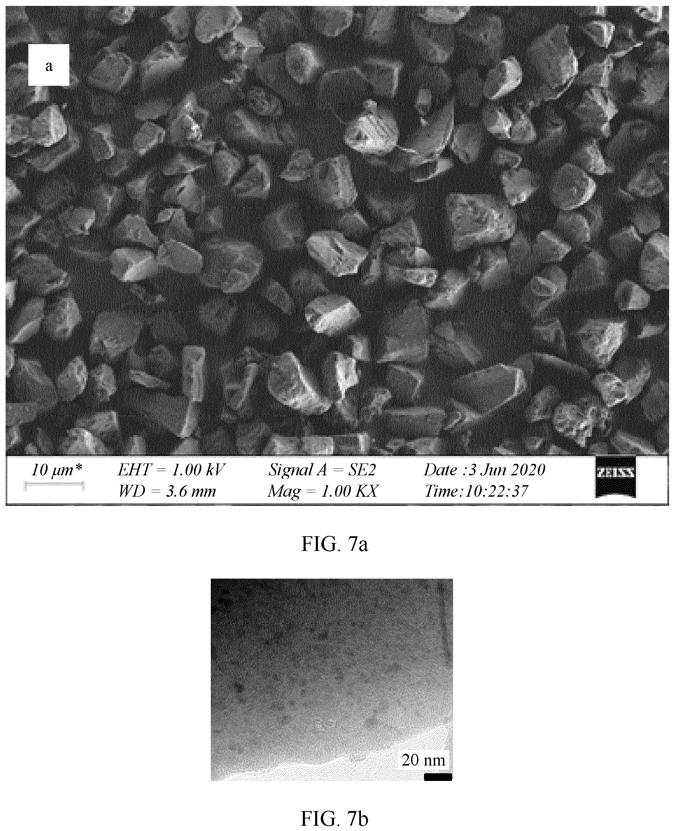

Comparative Example 1 is a commercially available silicon oxygen carbon negative electrode material. FIG. 7a is a SEM diagram of a morphology of a silicon oxygen carbon negative electrode material according to Comparative Example 1 of this application. FIG. 7b is an internal TEM diagram of the silicon oxygen carbon negative electrode material according to Comparative Example 1 of this application. As shown in FIG. 7a, the silicon oxygen carbon negative electrode material in Comparative Example 1 is an irregular block, and a size of D50 is 5 µm to 6 µm. It can be seen from FIG. 7b that, in an internal structure of the silicon oxygen carbon negative electrode material in Comparative Example 1, nanosilicon oxygen particles with a size of approximately 5 nm are dispersed in the carbon matrix.

### Comparative Example 2

A silicon carbon composite material in this comparative example is prepared based on the following method:
(1) Measure out 1 ml of ammonia water and disperse the ammonia water in a mixed solution of 20 ml of water and 10 ml of ethanol, stir the solution for 1 h, then add 1 ml of vinyltriethoxysilane, and stir the solution for 5 h at room temperature to obtain a milky white solution.
   Transfer the milky white solution to a polytetrafluoroethylene lining, perform a hydrothermal process at 100°C for 12 h, then perform centrifugal separation, wash a solid-phase system by using deionized water and ethanol separately for three times, and then place the solid-phase system in a drying box for 12 h at 70°C.
(2) Take a particular amount of the foregoing product into a quartz porcelain boat, place the quartz porcelain boat in a tubular atmosphere furnace for calcination, set a temperature rise speed to 5°C/min, and perform heat preservation in an argon protection atmosphere at 800°C for 45 min, to finally obtain the silicon carbon composite material of Comparative Example 2.

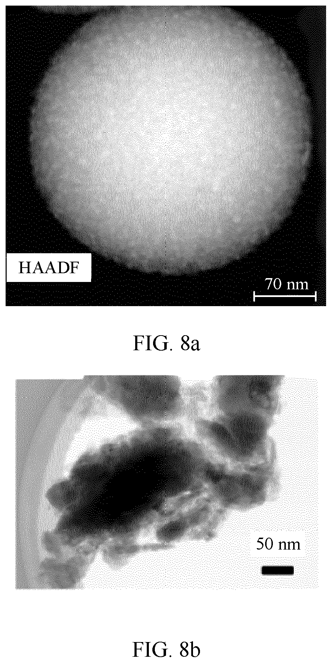

FIG. 8a is an HAADF phase diagram of a cross section of a high-resolution broken region of a silicon carbon composite material according to Comparative Example 2 of this application, where a particle size of SiOₓ is greater than 5 nm.

The silicon carbon composite material in Comparative Example 2 is etched by using hydrogen fluoride. FIG. 8b is a TEM diagram of a carbon matrix obtained after etching of the silicon carbon composite material according to Comparative Example 2. As shown in FIG. 8b, the etched carbon matrix is divided into several parts and is discontinuously distributed.

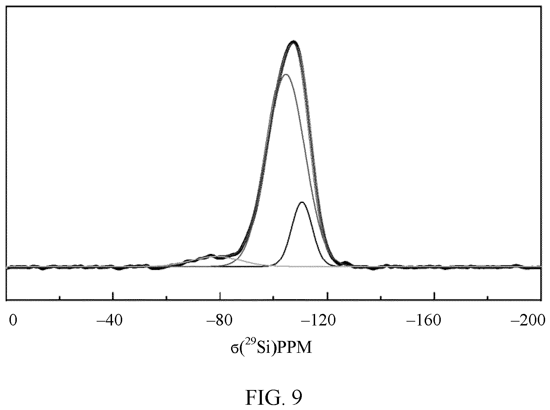

FIG. 9 is a spectrum of a 29Si magic angle spinning nuclear magnetic resonance (MAS NMR) technology of the silicon carbon composite material according to Comparative Example 2, where I(Si-C)/I(Si-O) is obviously higher than I(Si-C)/I(Si-O) in Embodiment 1.

### Test Example

1. The silicon carbon materials in Embodiments 1 and 2 and Comparative Examples 1 and 2 are compressed into sheets under a mercury injection device at a compaction density of approximately 1.7 g/cm³. Electrical conductivity of the compressed powder is tested by using a four-probe electrical conductivity meter. Results are shown in Table 1.
2. The silicon carbon materials in Embodiments 1 and 2 and Comparative Examples 1 and 2 are separately mixed with graphite at a particular ratio, so that a gram capacity is unified to 500 mAh/g, and the mixture and metal lithium are assembled into a button half battery.

Active materials (silicon carbon materials and graphite), acetylene black, and sodium alginate are dispersed in deionized water at a mass ratio of 70: 20: 10, and the solution is evenly stirred, and is ultrasonicated for four hours, to obtain an electrode slurry. The obtained electrode slurry is coated on a surface of a copper foil, and is dried at 85°C, to obtain a positive electrode plate. 1 M of LiPF dissolved in ethylene carbonate (EC) and dimethyl carbonate (DMC) is used as an electrolyte, a lithium plate is used as a negative electrode, Celgard 2400 is used as a separator, and CR 2025 stainless steel is used as a battery housing, and a button lithium-ion battery is obtained through assembly.

A cycle life and rate performance of the battery are tested. A test method is as follows. See Table 1 for results.

### a. Cycle life

A charge and discharge cycle test is performed on the battery at 25°C by using a battery charge and discharge tester, and the battery is charged and discharged at a constant current within a voltage range of 0.01 V to 0.3 V With the battery cycle, battery capacity is continuously attenuated. A quantity of cycles experienced by the battery until the capacity is attenuated to 80% of initial discharge capacity is recorded as the cycle life of the battery.

### b. Rate performance

A charge and discharge cycle test is performed on the battery at 25°C by using a battery charge and discharge tester, and the battery is charged and discharged at a constant current within a voltage range of 0.01 V to 0.3 V After a particular quantity of cycles each time, current density is changed to continue the cycle. Capacity released by battery performance under different current density is tested.

**Table 1**

| | Electrical conductivity of silicon carbon material | Secondary battery | | | | |
|---|---|---|---|---|---|---|
| | | Battery cycle life @I=200 mAh/g | Rate performance test (Capacity (mAh/g) under different current density) | | | |
| | | | 100 mA/g | 200 mA/g | 500 mA/g | 1000 mA/g |
| Embodiment 1 | 3.3 S/m | 500cyls@80% | 497 | 450 | 385 | 361 |
| Embodiment 2 | 8.0 S/m | 430cyls@80% | 499 | 456 | 393 | 365 |
| Comparative Example 1 | 1.56×10⁻² S/m | 127cyls@80% | 493 | 371 | 150 | 103 |
| Comparative Example 2 | 0.51 S/m | 351cyls@80% | 496 | 435 | 364 | 233 |

It can be learned from Table 1 that:
1. The electrical conductivity of Embodiments 1 and 2 is obviously superior to that of Comparative Examples 1 and 2. Therefore, the silicon carbon composite materials of Embodiments 1 and 2 can effectively improve fast charging performance of the secondary battery. The reason is as follows: The carbon layer of Comparative Example 1 is mainly coated on an outer surface of the material, and an effective path for transferring lithium ions to silicon oxygen particles is not formed, and the particle size of the silicon oxygen particle is large. Therefore, transfer efficiency of the lithium ions is not high. As result, the electrical conductivity is poor. There are a large quantity of SiC bonds in Comparative Example 2. Therefore, the electrical conductivity of the carbon matrix is affected. As a result, the electrical conductivity is poor.
   The electrical conductivity of Embodiment 2 is superior to that of Embodiment 1. The reason may be that the silicon carbon composite material in Embodiment 2 is doped with heterogeneous elements, so that electrical conductivity is greatly improved.
2. The cycle performance of the secondary battery obtained by using the materials in Embodiments 1 and 2 is obviously superior to that of the secondary battery obtained by using the materials in Comparative Examples 1 and 2. The reasons are as follows: The size of the silicon oxygen particle of the material in Comparative Example 1 is 5 µm to 6 µm, and the size of the silicon oxygen particle of the material in Comparative Example 2 is greater than 5 nm. Therefore, a large volume expansion in the cycle process easily causes pulverization of the silicon oxygen particle. As a result, cycle performance of the battery is affected.
3. The rate performance of the secondary battery obtained by using the materials in Embodiments 1 and 2 is obviously superior to that of the secondary battery obtained by using the materials in Comparative Examples 1 and 2. The reason is as follows: The electrical conductivity of the materials in Comparative Examples 1 and 2 is poor, and therefore, capacity in the battery cannot be effectively released. As a result, the rate performance of the secondary battery obtained by using the materials in Comparative Examples 1 and 2 is poor, especially when the current density is high, the capacity in the battery is less released.

Finally, it should be noted that, the foregoing embodiments are merely intended for describing the technical solutions of embodiments of this application other than limiting embodiments of this application. Although embodiments of this application are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A silicon carbon composite material, wherein the silicon carbon composite material comprises a core and a carbon coating layer, and at least one part of a surface of the core is covered by the carbon coating layer; and
the core comprises a carbon matrix and SiOₓ particles, the carbon matrix is continuously distributed and comprises N channels in communication with outside, and the SiOₓ particles are filled in the channels, wherein
a size of the SiOₓ particle is 0.1 nm to 0.9 nm, 0.9≤x≤1.7, and N≥1 and is an integer.

2. The silicon carbon composite material according to claim 1, wherein a mass percentage content of the carbon matrix is 10% to 40% based on a mass of the core.

3. The silicon carbon composite material according to claim 1 or 2, wherein a specific surface area of the carbon matrix is 800 m²/g to 1400 m²/g.

4. The silicon carbon composite material according to claim 3, wherein a specific surface area of the silicon carbon composite material is 5 m²/g to 20 m²/g.

5. The silicon carbon composite material according to claim 3, wherein in a Raman spectrogram of the carbon matrix, 1.5≤ID/IG≤0.8.

6. The silicon carbon composite material according to claim 1, wherein a nuclear magnetic resonance spectrum of the silicon carbon composite material comprises a Si-C peak and a Si-O peak, and a ratio of strength I_{Si-C} of the SiC peak to strength I_{Si-O} of the Si-O peak is less than 0.05.

7. The silicon carbon composite material according to claim 1, wherein a thickness of the carbon coating layer is 5 nm to 20 nm, and a carbon atom interlayer spacing d002 of the carbon coating layer is 0.3354 nm to 0.34 nm.

8. The silicon carbon composite material according to any one of claims 1 to 7, wherein the silicon carbon composite material further comprises at least one of elements N, P, B, Cl, Br, and I.

9. The silicon carbon composite material according to claim 1, wherein a particle size of the silicon carbon composite material is 50 nm to 2 µm.

10. The silicon carbon composite material according to any one of claims 1 to 9, wherein the silicon carbon composite material is prepared by using a method comprising the following process:
(1) under an alkaline condition, stirring an aqueous solution of trimethoxysilane compounds to make a system turbid, and collecting precursor particles; and
(2) performing sintering treatment on the precursor particles to obtain the silicon carbon composite material, wherein a temperature of the sintering treatment is 900°C to 1200°C, and duration of the sintering treatment is 1 h to 10 h.

11. A method for preparing a silicon carbon composite material, comprising the following steps:
(1) under an alkaline condition, stirring an aqueous solution of trimethoxysilane compounds to make a system turbid, and collecting precursor particles; and
(2) performing sintering treatment on the precursor particles to obtain the silicon carbon composite material, wherein a temperature of the sintering treatment is 900°C to 1200°C, and duration of the sintering treatment is 1 h to 10 h, wherein
the silicon carbon composite material comprises a core and a carbon coating layer, and at least one part of a surface of the core is covered by the carbon coating layer; and
the core comprises a carbon matrix and SiOₓ particles, the carbon matrix comprises N channels in communication with outside, and the SiOₓ particles are filled in the channels, wherein
a size of the SiOₓ particle is 0.1 nm to 0.9 nm, and 0.9≤x≤1.7.

12. The preparation method according to claim 11, wherein in step (1), ammonia water with a volume concentration of 0.6% to 15% is added to the aqueous solution of trimethoxysilane compounds, so that pH of the system is 8 to 13.

13. The preparation method according to claim 11, wherein in the aqueous solution of trimethoxysilane compounds, a volume concentration of the trimethoxysilane compounds is 0.4% to 5%.

14. The preparation method according to claim 11, wherein a temperature rise speed of the sintering treatment is 1°C/min to 10°C/min.

15. The preparation method according to any one of claims 11 to 14, wherein after step (1), the method further comprises feeding a carbon source into the system for carbon coating.

16. The preparation method according to claim 15, wherein the carbon coating is performed by using a vapor deposition reaction, and a temperature of the vapor deposition reaction is 700°C to 1200°C.

17. The preparation method according to claim 11, wherein the trimethoxysilane compound is selected from one or more of trimethoxysilane, methyltrimethoxysilane, N-trimethoxypropylsilane, N-trimethoxyoctylsilane, 3-aminopropyltrimethoxysilane, 3-1-[3-(trimethoxysilyl)propyl]urea, N-dodecyltrimethoxysilane, (3-chloropropyl)trimethoxysilane, (3-phobyl propyl)trimethoxysilane, 3 -(2-aminoethyl)-aminopropyltrimethoxysilane, trimethoxybenzenesilane, vinyltrimethoxysilane, and 3-iodophenyltrimethoxysilane.

18. An electrode plate, wherein the electrode plate comprises the silicon carbon composite material according to any one of claims 1 to 10, or comprises the silicon carbon composite material obtained by using the preparation method according to any one of claims 11 to 17.

19. A secondary battery, wherein the secondary battery comprises the electrode plate according to claim 18.

20. An electronic device, wherein a drive source or an energy storage source of the electronic device comprises the secondary battery according to claim 19.
